# EUROPÄISCHE PATENTANMELDUNG

(11) **EP 1 258 199 A1**
(43) Veröffentlichungstag der Anmeldung: **20.11.2002**
(21) Anmeldenummer: 02008051.1
(22) Anmeldetag: 11.04.2002
(51) Int. Cl.: A23B 4/052

(54) **Reibraucherzeuger**

(30) Priorität: 17.05.2001 DE 10124324
(71) Anmelder: REICH, WOLFGANG, 73660 URBACH (DE)
(72) Erfinder: REICH, WOLFGANG, 73660 URBACH (DE)
(74) Vertreter: Lutz, Johannes Dieter, Dr.

(57) **Zusammenfassung**

Bei einem Reibraucherzeuger (10) für die Rauchversorgung einer Räucherkammer mit einem mittels eines Elektromotors (13) gesteuert antreibbaren Reibrad (12), an das mittels einer Vorschubeinrichtung ein stabförmiges Reibholz (11) andrückbar ist, das in einer Führungseinrichtung (16) verschiebbar geführt und dabei gegen Verdrehen gesichert ist, wobei die Drehachse des Reibrades und die zentrale Achse der Führungseinrichtung miteinander fluchten und die Führungseinrichtung mit einem kleinen Führungsspiel von z. B. 2 bis 4 % der Lateraldimensionen des Reibholzes behaftet ist, und wobei das Reibrad mit Reibrippen (46, 47, 48) versehen ist, die von einem Basiskörper (51) aufragen und durch Reibkanten berandet sind, die in einer bezüglich der Drehachse des Reibrades rotationssymmetrischen Hüllfläche verlaufen, ist die Erzeugende der Hüllfläche eine Linie, die die Drehachse (14) des Reibrades (12)unter einem spitzen Winkel schneidet; das Reibrad hat mindestens drei Reibrippen, deren Anordnung bezüglich einer die Drehachse des Reibrades enthaltenden Radialebene desselben symmetrisch ist, wobei zwei Reibrippen mit je einer ihrer Reibkanten auf der Drehachse des Reibrades winklig aneinander anschließen.

## Beschreibung

Die Erfindung betrifft einen Reibraucherzeuger für die Rauchversorgung einer Räucherkammer, in der räucherfähige Lebensmittel einer Räucherbehandlung unterziehbar sind und mit den weiteren, im Oberbegriff des Patentanspruchs 1 genannten, gattungsbestimmenden Merkmalen.

Ein derartiger Reibraucherzeuger ist durch die DE 44 20 394 C1 bekannt.

Bei dem bekannten Reibraucherzeuger ist das Reibrad als ebene Kreisscheibe ausgebildet, die an ihrer reibenden Stirnseite Rippen hat, deren Reibkanten in einer gemeinsamen Ebene verlaufen. Das Reibholz ist mittels einer Vorschubeinrichtung mit definierter einstellbarer Kraft an die Reibseite des Reibrades andrückbar. Das Reibrad hat zum Zweck eines zentrierenden Eingriffs mit dem Reibholz eine kurze ein- oder mehrschneidige Bohrerspitze, deren Durchmesser klein gegen den Durchmesser des Reibrades und demgemäß auch klein gegen den größten Durchmesser des Reibholzes ist. Bei dieser Gestaltung des Reibrades ist eine für einen ruhigen Lauf des Reibrades erforderliche exakte Zentrierung zumindest über längere Betriebszeiten des bekannten Reibraucherzeuger hinweg gesehen, nicht zuverlässig erreichbar, denn es kann mit abnehmender Länge des Reibholzes mehr und mehr zu Ausweichbewegungen desselben kommen, die zu Schwingungen führen können, deren Folgen für zunehmende Geräuschentwicklung und auch zunehmende Materialbelastung im Bereich der Führungseinrichtung und der Reibradlagerung sind.

Aufgabe der Erfindung ist es daher, einen Reibraucherzeuger der eingangs genannten Art dahingehend zu verbessern, daß unter allen statistisch wesentlichen Betriebsbedingungen eine zuverlässige Zentrierung des Reibholzes bezüglich der Drehachse des Reibrades und damit auch ein gleichmäßig geräuscharmer Betrieb des Reibraucherzeugers gewährleistet ist.

Diese Aufgabe wird erfindungsgemäß durch die kennzeichnenden Merkmale des Patentanspruchs 1 gelöst, bei der Realisierung gemäß den Merkmalen des Anspruchs 2, d. h. in einer kegelförmigen Gestaltung des Reibrades oder, gemäß den Merkmalen des Anspruchs 3, d. h. im Sinne einer konischen Form des Reibrades, der Zentrierbereich des Rades sich jeweils über dessen gesamten Durchmesser erstreckt, derart, daß das Rad sowohl in seinen zentralen als auch in seinem peripheren Bereich eine insgesamt höchstmögliche Zentrierwirkung vermittelt. Schwingungsbewegungen des Reibholzes, die z. B. durch asymmetrisch verteilte Härtevariationen und entsprechend asymmetrisch auf das Reibholz wirkende Kipp- oder Ausweichmomente erzeugen, können gleichsam auf der gesamten Mantelfläche des Reibrades aufgefangen werden. In jedem Zustand des Reibholzes sind, unabhängig von dessen Länge, laterale Ausweichbewegungen des Reibholzes und hiermit verknüpfte Schwingungsbewegungen desselben weitestgehend ausgeschlossen und damit ein ruhiger Lauf des Reibholzes gewährleistet.

Eine vertikale Orientierung der Reibholzführung vorausgesetzt, ist die - kegelige - Gestaltung des Reibrades gemäß Anspruch 2 insbesondere für einen Reibraucherzeuger geeignet, bei dem das Reibholz von oben her an das Reibrad angedrückt wird, während die trichterförmige Gestaltung des Reibrades gemäß Anspruch 3 vorteilhaft ist, wenn das Reibholz von unten her in den Reibbereich des Reibrades hineingedrückt wird. In beiden Varianten ergibt sich ein vom Zentrum des Reibrades nach außen abfallender Verlauf der Reibrippen, wodurch die Abfuhr von Holzabrieb aus dem Reibbereich unterstützt wird.

Für eine einfache und preisgünstige Fertigung des Reibrades ist es besonders vorteilhaft, wenn die Reibrippen als stabförmige Teile ausgebildet sind, die in Nuten des Basiskörpers eingesetzt und mit diesem, z. B. durch Schweißen, fest verbunden sind.

Durch die gemäß Anspruch 7 vorgesehene Unterteilung des Reibrades in einen in die Reibrippen ragenden Basiskörper und einen mit diesem sowie mit der Abtriebswelle des Antriebsmotors lösbar fest verbindbaren Nabenkörper wird sowohl eine einfache Art der Herstellung sowie der Montage des Reibrades erzielt, als auch die Voraussetzung dafür geschaffen, daß der Nabenkörper mit geringem technischen Aufwand als Kühllüfter ausgebildet werden kann, der eine Kühlung insbesondere der Abtriebswelle des das Reibrad antreibenden Elektromotors vermittelt. Dadurch wird ein wirksamer Schutz des Motors gegen thermische Überbelastung erzielt und die Langzeitstandfestigkeit des Reibraucherzeugers insgesamt verbessert.

Zur Erzielung dieser Kühllüfterfunktion des Nabenkörpers sind durch die Merkmale der Ansprüche 9 bis 13 vorteilhaft einfache Gestaltungen des Nabenkörpers und des Reibrades insgesamt angegeben, die auch eine einfache Montage ermöglichen.

Die gemäß Anspruch 14 vorgesehen "symmetrische" Querschnittsgestaltung der Reibrippen ist zweckmäßig, wenn als Antriebsmotor ein Motor mit umkehrbarer Drehrichtung vorgesehen ist, so daß eine Betriebssteuerung des Reibraucherzeugers gemäß den Merkmalen des Anspruchs 16 möglich ist, die zu einem besonders gleichmäßigen Abrieb des Reibholzes führt.

Eine durch die Merkmale des Anspruch 17 ihrem grundsätzlichen Aufbau nach und durch die Merkmale der Ansprüche 18 bis 20 in Einzelheiten hinsichtlich ihrer Antriebselemente und deren Funktion näher spezifizierte Vorschubeinrichtung umfaßt in der bevorzugten Gestaltung gemäß Anspruch 21 eine Gleitrolle, an der das Reibholz auf der seiner einen dem Antriebsrad der Vorschubeinrichtung gegenüberliegenden Längsseite reibungsarm abstüztbar ist. Das Transportrad kann in einfacher Gestaltung in der Art eines Kettenrades ausgebildet sein, dessen Zähne bei Drehung des Rades innerhalb eines begrenzten Winkelbereiches, dem ein Vorschubweg des Reibholzes von ca. 1 bis 2 cm entspricht, sukzessive in kraft-formschlüssigen Eingriff mit den hinreichend nachgiebigen Reibholz gelangen, wodurch das Reibholz mit definierter Kraft, die durch den Druck in einem vorzugsweise pneumatischen Zylinder, durch den das Transportrad quer zur Transportrichtung des Holzes verschiebbar ist, einstellbar ist.

Hierbei ist es besonders vorteilhaft, wenn der Abstand der Gleitrolle von der zentralen Achse der Führungseinrichtung einstellbar ist, derart, daß die zentrale Längsachse des Reibholzes und die zentrale Achse der Führungseinrichtung innerhalb des Führungsspiels derselben exakt ineinander fluchten.

Dabei ist es weiter besonders vorteilhaft, wenn das Transportrad und die Gleitrolle zwischen dem reibradseitigen Ende der z. B. durch Winkelprofile gebildeten Führungseinrichtung und dem Reibrad angeordnet sind, so daß auch noch "außerhalb" der Führungseinrichtung, d. h. in unmittelbarer Nähe des Reibrades selbst dann noch eine Zentrierung des Reibholzes erzielt wird, wenn dieses so weit verbraucht ist, daß sein führungsseitiges Ende sich schon außerhalb der Führungseinrichtung befindet.

Weitere Einzelheiten des erfindungsgemäßen Reibraucherzeugers ergeben sich aus der nachfolgenden Beschreibung von Ausführungsbeispielen anhand der Zeichnung. Es zeigen
- Fig. 1: ein erstes Ausführungsbeispiel eines erfindungsgemäßen Reibraucherzeugers, mit einem kegelförmigen Reibrad, an das von oben her ein Reibholz andrückbar ist, in schematisch vereinfachter, teilweise abgebrochener Seitenansichtsdarstellung,
- Fig. 2a: das Reibrad des Reibraucherzeuges gemäß Fig. 1 in vergrößertem Maßstab in einer der Fig. 1 entsprechenden, vereinfachten Seitenansichtsdarstellung;
- Fig. 2b: das Reibrad gemäß Fig. 2a in Draufsicht in Richtung des Pfeils IIb der Fig. 2a gesehen;
- Fig. 2c: den zentralen Bereich der Fig. 2b in vergrößerter Teildarstellung;
- Fig. 2d: eine Teilansicht des zentralen Bereiches einer Reibrippe der Fig. 2c bei weggebrochener Nutwange ihrer Aufnahmenut;
- Fig. 3a: den Nabenkörper des Reibrades gemäß Fig. 2a im Schnitt längs der Linie IIIa-IIIa der Fig. 3b;
- Fig. 4a: ein Ausführungsbeispiel eines erfindungsgemäßen Reibraucherzeugers mit konischem Basiskörper des Reibrades in schematisch vereinfachter Teilansicht;
- Fig. 4b: das Reibrad des Reibraucherzeugers gemäß Fig. 4a, gesehen in Richtung des Pfeils IVb der Fig. 4a und
- Fig. 4c: den Basiskörper des Reibrades gemäß Fig. 4b in einer der Ansicht der Fig. 4a entsprechenden, vergrößerten Darstellung.

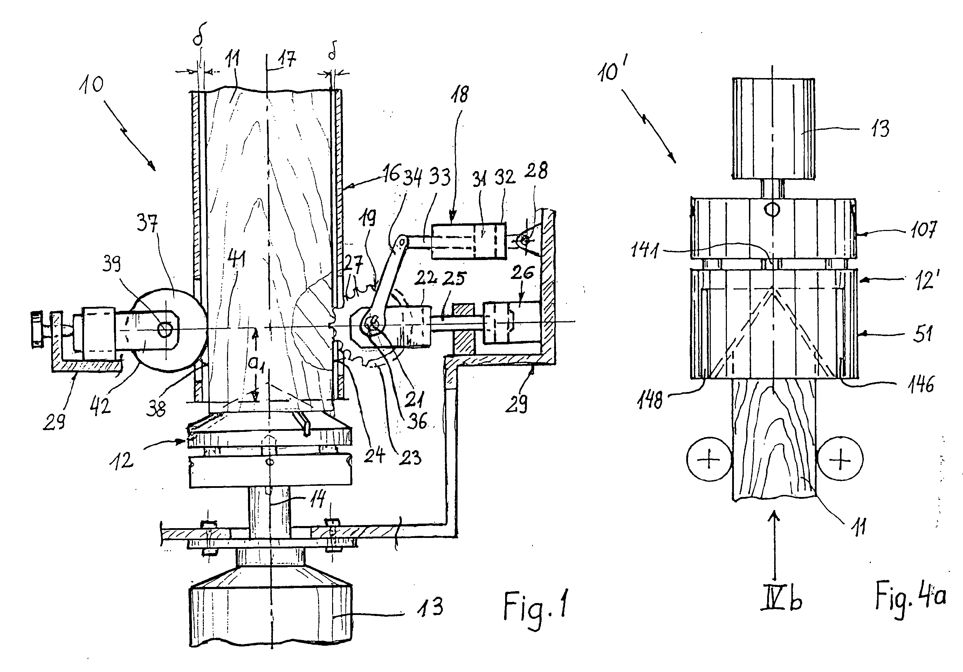

Der in der Fig. 1 insgesamt mit 10 bezeichnete Reibraucherzeuger dient zur Rauchversorgung einer nicht dargestellten Räucherkammer, in der Nahrungsmittel, wie Wurst, Fleisch oder Käse - z. B. zum Zweck der Geschmacksverbesserung oder zur Erzielung einer erhöhten Haltbarkeit - einer Räucherbehandlung unterworfen werden. Der Reibraucherzeuger arbeitet nach dem Prinzip, die Reibungswärme, die beim Andrücken eines stabförmigen Reibholzes 11 mit definierter Kraft an ein rasch, z. B. mit ca. 3.000 U/min rotierendes, insgesamt mit 12 bezeichnetes Reibrad, entsteht, zur Erzeugung eines "kalten" Rauches definierter Qualität zu nutzen, der von dem Reibholz aufgrund pyrolytischer Prozesse abgegeben wird, wobei das Reibholz sich in Rauchgase und einen praktisch vollständig aus Kohlenstoff und Asche bestehenden Feststoffrückstand zersetzt.

Bei dieser Art der Reibraucherzeugung wird pro Minute ca. 1 cm der Länge des Reibholzes 11 mit quadratischem Querschnitt von 6 X 6 cm² verbraucht.

Bei dem Ausführungsbeispiel gemäß Fig. 1 ist das Reibrad 12, das mittels eines Elektromotors 13 mit umkehrbarer Drehrichtung antreibbar ist, mit vertikalem Verlauf seiner Drehachse 14 unmittelbar unterhalb des austrittsseitigen Endes einer Vertikalführungseinrichtung 16 angeordnet, derart, daß die Drehachse 14 des Elektromotors 13 und des Reibrades 12 mit der zentralen Achse 17 der Vertikalführungseinrichtung 16 fluchtet. Die Vertikalführungseinrichtung ist mit einem kleinen Führungsspiel δ behaftet, damit das Reibholz 11 leichtgängig verschiebbar ist.

Zur Einstellung der Kraft, mit der das Reibholz mit seinem unteren Ende an das Reibrad 12 andrückbar ist, ist eine insgesamt mit 18 bezeichnete Vorschubeinrichtung vorgesehen, die ein in der Art eines Kettenrades ausgebildetes Transportrad 19 umfaßt, das um eine außerhalb der Führungseinrichtung verlaufende horizontale Achse 21 drehbar an einem Lagerblock 22 gelagert ist, derart, daß die Ebene des Kopfkreises 23 der Radzähne die zentrale Führungsachse 17 enthält und rechtwinklig zu der dem Transportrad 19 zugewandten Längsfläche 24 des in der Führungseinrichtung 16 geführten Reibholzes 11 verläuft. Das Transportrad 19 ist mittels eines doppelt wirkenden pneumatischen Zylinders 26, dessen einseitig aus dem Gehäuse austretende Kolbenstange 25 fest mit dem Lagerblock 22 des Transportrades 19 verbunden ist, "horizontal" auf das Reibholz 11 zu- und von diesem wegbewegbar, wodurch Zähne 27 des Transportrades 19 mit dem - etwas nachgiebigen - Reibholz 11 in kraft-formschlüssigen Eingriff bringbar sind, und von diesem wieder wegbewegbar, so daß diese Zähne wieder außer Eingriff mit dem Reibholz 11 gebracht werden können.

Zum rotatorischen Antrieb des Transportrades 19, durch den der auf das Reibrad 12 zu gerichtete Vorschub des Reibholzes 11 erfolgt, ist ein um eine horizontale Achse 28, die parallel zur horiztontalen Drehachse des Transportrades 19 verläuft, schwenkbar an einem lediglich schematisch dargestellten Gestell 29 des Reibraucherzeugers 10 gelagerter weiterer, doppelt wirkender pneumatischer Zylinder 31 vorgesehen, dessen einseitig aus dem Zylindergehäuse 32 austretende Kolbenstange 33 gelenkig mit dem einen Ende eines Schwenkhebels 34 verbunden ist, dessen anderes Ende drehfest mit der Lagerwelle 36 des Transportrades 19 verbunden ist, mit der diese am horizontal verschiebbaren Lagerblock 22 gelagert ist. Durch den Formschluß der teilweise gelenkigen Verbindungen der erläuterten Elemente der Vorschubeinrichtung 18 ist das Transportrad 19 gegen ein Verdrehen um die zentrale Achse des fest am Gestell 29 angeordneten doppelt wirkenden Zylinders 26 gesichert.

Der Schwenkbereich des das Transportrad 19 unmittelbar antreibenden Schwenkhebels 34 ist auf einen Winkelbereich um 30° begrenzt, dem bei geeigneter Dimensionierung des Transportrades 19 ein Transporthub des Reibholzes von 2 bis 3 cm entspricht, der somit ausreichend für einen Raucherzeugungszyklus ist, innerhalb dessen das Reibholz 11 allenfalls um etwa 1 cm auf das Reibrad 12 zu bewegt werden muß. Da im Räucherbetrieb der Reibraucherzeuger 10 intermettierend betrieben wird, derart, daß auf eine Raucherzeugungsphase mit einer typischen Dauer von 30s eine Stillstandsphase des Reibrades 12 von ebenfalls 30s Dauer folgt, ist die beispielhaft erwähnte Auslegung der Vorschubeinrichtung 18 auf einen maximalen Vorschub-Hub um 2 bis 3cm völlig ausreichend, da bei Stillstand des Reibrades 12 das Transportrad durch Rückzugsbetätigung des Andruck-Zylinders 26 außer Eingriff mit dem Reibholz 11 gebracht und ebenfalls durch Rückzugsbetätigung des Schwenkzylinders 31 das Transportrad wieder in diejenige Ausgangsstellung gedreht werden kann, von der aus wieder der maximale Vorschung-Hub, auf den die Vorschubeinrichtung 18 ausgelegt ist, zur Verfügung steht.

An der dem Transportrad 19 gegenüberliegenden Seite der Führungseinrichtung 16 ist eine Gleitrolle 37 angeordnet, an der das Rebholz 11 mit seiner dem Transportrad 19 gegenüberliegenden Längsfläche 38 abstützbar ist. Die Drehachse 39 dieser Gleit- bzw. Stützrolle 37 ist in derselben Höhe angeordnet wie die Drehachse 21 des Transportrades 19, so daß diese beiden Achsen 21 und 39 eine rechtwinklig zur zentralen Achse 17 der Führungseinrichtung 11 verlaufende Ebene 41 aufspannen, die in einem geringen Abstand a₁ vom unteren, reibradseitigem Ende der Führungseinrichtung 16 verläuft.

Die Gleitrolle 37 ist an einem Lagerblock 42 gelagert, der horizontal verschiebbar an einem Element des Gestells 29 des Reibraderzeugers den verschiebbar angeordnet ist, derart, daß im Bereich der Achsebene 41 der Abstand der Drehachse 39 der Gleitrolle 37 von der zentralen Achse 17 der Vertikalführungseinrichtung 16 einstellbar veränderbar ist, zweckmäßigerweise so, daß im Bereich der Achsebene 41 die zentrale Achse 17 der Längsführungseinrichtung 16 in derjenigen Mittelebene des Reibholzes 11 liegt, die zwischen den beiden Längsflächen 24 und 38 verläuft, an deren einer das Transportrad 19 angreift und an deren anderer die Gleitrolle 37 abgestützt ist.

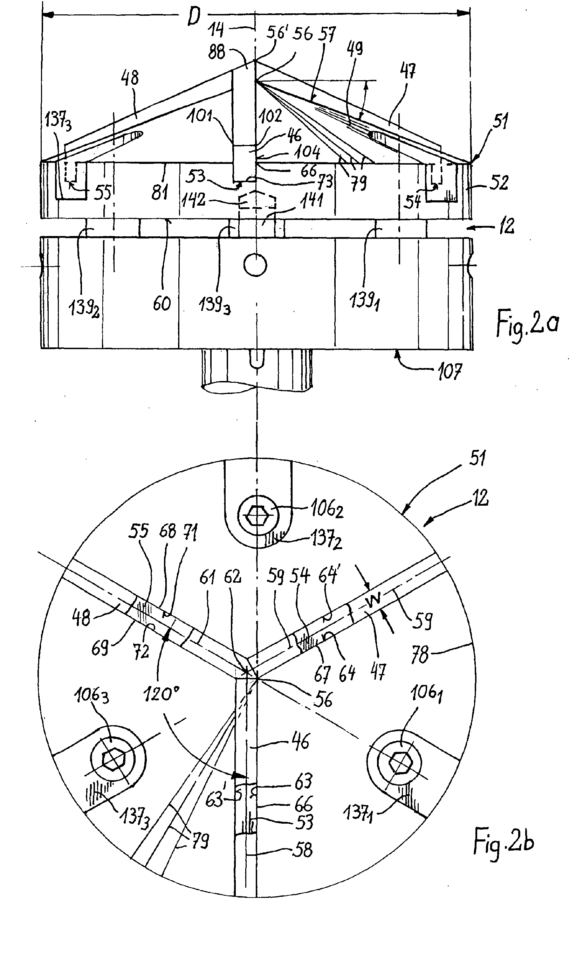

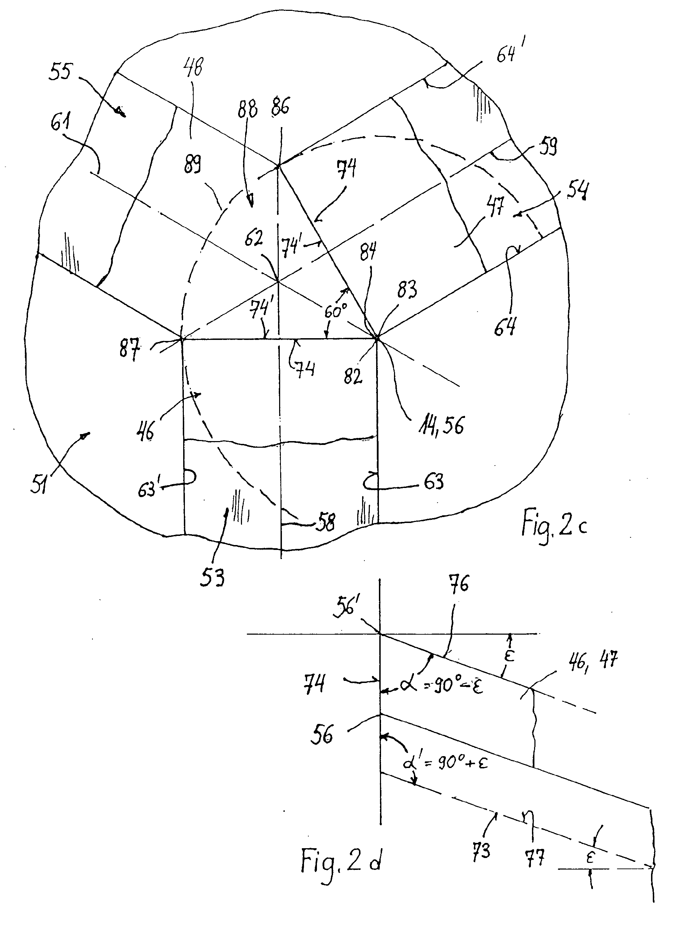

Das in den Fig. 2a und 2b in vergrößertem Maßstab dargestellte Reibrad 12 hat bei dem zur Erläuterung gewählten Ausführungsbeispielen drei Reibrippen 46, 47 und 48, die von einem der Grundform nach kegelförmigen "oberen" Abschnitt 49 eines insgesamt mit 51 bezeichneten Basiskörpers aufragen, der im übrigen "unterhalb" des kegelförmigen Abschnitts 41 die Form einer Kreisscheibe 52 hat, die einstückig mit dem kegelförmigen Abschnitt 49 ausgeführt ist.

Die Reibrippen 46, 47 und 48 sind durch gerade Stahlstäbe rechteckigen Querschnitts gebildet, die in der aus den Figuren 2a und 2b ersichtlichen Anordnung in Nuten 53 und 54 bzw. 55 des Basiskörpers 51 eingesetzt und fest mit diesem, z.B. durch Schweißen, verbunden sind. Die - querschnittsgleichen - Nuten gehen im Bereich der Spitze 56 der Kegelmantelfläche 57 des Basiskörpers 51 ineinander über, in deren Bereich sie sich - fertigungsbedingt - kreuzen. Die Nuten 53, 54 und 55 haben jeweils dieselbe lichte Weite w, die klein ist gegen den Durchmesser D des Basiskörpers 51 und z.B. 1/20 dieses Durchmessers D beträgt. Sie sind so angeordnet, daß ihre zwischen den jeweiligen Nutwangen verlaufenden Mittelebenen 58 und 59 bzw. 61, die senkrecht zu der "unteren" Basisfläche 60 des Basiskörpers 51 verlaufen, sich entlang parallel zur zentralen Achse des Basiskörpers 51, die auch die Drehachse des Motors ist, verlaufenden Schnittlinie 62 schneiden, bezüglich derer der azimutale Abstand der Mittelebenen der Nuten jeweils 120° beträgt. Die Anordnung der Nuten 53, 54 und 55 ist symmetrisch bezüglich der sowohl die Schnittlinie 62 als auch die zentrale Achse 14 des Basiskörpers 51 enthaltenden Mittelebene 61 der Nut 55, die ihrerseits, herstellungsbedingt, symmetrisch bezüglich dieser Mittelebene 61 ist.

In beiden weiteren Nuten 53 und 54 sind, wie insbesondere auch der weiter vergrößerten Darstellung der Fig. 2c entnehmbar, so in den Basiskörper 51 eingearbeitet, daß ihre azimutal einander benachbarten Nutwangen 63 und 64 entlang der zentralen Achse 14, die die Kegelspitze 56 des Basiskörpers 51 enthält, aneinander anschließen. Diese beiden Nuten 53 und 54 sind - "asymmetrisch" - so angeordnet, daß nur die freien Kanten 66 und 67 ihrer einander azimutal benachbarten Nutwangen 63 und 64 entlang einer Mantellinie des kegelförmigen Abschnitts 49 des Basiskörpers 51 verlaufen, während die freien Kanten ihrer dazu parallelen Nutwangen 63' und 64' entlang hyperbolischer Kegelschnitt-Linien verlaufen, wie auch die freien Kanten 68 und 69 der ihnen jeweils azimutal benachbarten Nutwangen 71 und 72 der bezüglich ihrer Mittelebene 61 symmetrischen Nut 55 des Basiskörpers 51.

Die die Reibrippen 46, 47 und 48 bildenden Stahlstäbe rechteckigen Querschnitts sind in die Nuten 53, 54 und 55 so eingesetzt, daß sie sich auf dem überwiegenden Teil ihrer Länge, d.h. abgesehen von einem kleinen zentralen Bereich des Basiskörpers 51 am Grund 73 der jeweiligen Nut abstützen und sich vom Rand 78 des Basiskörpers 51 bis zur Kegelspitze 56 desselben erstrecken.

Die zum Einsetzen in die "asymmetrischen" Nuten 53 und 54 des Basiskörpers bestimmten Reibrippen-Profilstäbe 46 und 47 sind, wie im Detail der Fig. 2d entnehmbar, an ihren beim fertigen Reibrad im Bereich der Kegelspitze 56 angeordneten, inneren Enden so abgeschnitten, daß ihre Endstirnflächen 74 mit den freien, äußeren Längsstirnflächen 76 einen spitzen Winkel α von 90° -ε einschließen und diese Endstirnflächen 74 mit den am jeweiligen Grund 73 der jeweiligen Nut 53 bzw. 54 abgestützten "inneren" Längsbegrenzungsflächen 77 den Winkel α' von ca. 90° +ε einschließen, wobei mit ε der Kegelwinkel bezeichnet ist, den die von der Kegelspitze 56 radial zum kreisförmigen Rand 78 des kegelförmigen oberen Abschnitts 49 des Basiskörpers 51 verlaufenden Mantellinien 79 mit der rechtwinklig zur zentralen Achse 14 desselben verlaufenden Kegelbasis-Ebene 81 einschließen. Auch der zur Bildung der dritten Reibrippe 48 vorgesehene Stahl-Profilstab wird in entsprechender Weise in seinem "inneren", beim fertigen Reibrad, im Bereich der Kegelspitze 56 angeordneten Ende entsprechend abgeschnitten.

Zur Erzielung der in den Fig. 2a und 2b dargestellten Reibrippenanordnung werden die von den asymmetrischen Nuten 53 und 54 aufzunehmenden Profilstäbe 46 und 47 so in diese Nuten eingesetzt, daß sich die einander benachbarten Kanten 82 und 83 ihrer schräg zu den äußeren und inneren Längsbegrenzungsflächen 76 und 77 der Stäbe verlaufenden "spitzenseitigen" Endstirnflächen 74 entlang der zentralen Kegelachse 14, die durch die Kegelspitze 56 des Basiskörpers 51 verläuft, berühren, wobei diese Endstirnflächen 74 einen Winkel von 60° miteinander einschließen.

Der in die symmetrische Nut 55 zur Bildung der Reibrippe 48 eingesetzte Stahlstab ist an seinem der Kegelspitze zugewandten Ende prismatischschneidenförmig geschnitten bzw. geschliffen, derart, daß seine Schneidenflächen ebenfalls einen Winkel von ca. 60° miteinander einschließen, wobei die "horizontale" Breite dieser Schneidenflächen 74' derjenigen der Endstirnflächen 74 der in die asymmetrischen Nuten 53 und 54 eingesetzen Profilstäbe 46 und 47 entspricht.

Der die Reibrippe 48 bildende Stahlstab ist so in seine Aufnahmenut 55 des Basiskörpers 51 eingesetzt, daß seine in der 60°-Schneidenkante 84 aneinander anschließenden Seitenflächen 74' "deckungsgleich" an den Endstirnflächen 74 der beiden in die asymmtrischen Nuten 53 und 54 eingesetzten Profilrippenstäbe 46 und 47 anliegen und seine Seitenkante 84 die benachbarten Eckkanten 82 und 83 der Profilrippenstäbe 46 und 47 entlang der zentralen Achse 14 des Basiskörpers 51 berührt.

In dieser Konfiguration werden die die Reibrippen bildenden Stahlstäbe 46, 47 und 48 entlang der sich ergebenen Berührungslinien, insbesondere entlang der in der zentralen Achse 14 verlaufenden Eckkanten 82, 83 und 84 sowie entlang der von dieser ausgehenden Berührungslinien und den parallel zur zentralen Achse verlaufenden Berührungsecken 86 und 87, in denen die weiteren Längsflächen der Reibrippen ineinander übergehen, miteinander und mit dem Basiskörper 51 verschweißt.

Die endgültige Form der Reibrippen wird durch eine abschließende DrehBearbeitung erzielt, derart, daß die Reibrippen so überdreht werden, daß die Einhüllende ihrer freien Längsbegrenzungsflächen 76 die Mantelfläche eines Kegels ist, deren Erzeugende eine die zentrale Achse 14 des Basiskörpers 51 in vertikalem Abstand von dessen Kegelspitze 56 schneidende Gerade ist, die die zentrale Achse 14 unter dem Kegelwinkel ε des Kegels des Basiskörpers 51 schneidet. Dadurch entsteht im zentralen Bereich der Reibrippen ein "kleiner" Zentrierkegel 88, dessen kreisförmiger Basisrand 89 einen Durchmesser hat, der dem doppelten Wert der "horizontalen" Breiten der inneren Endstirnflächen 74 der Profilstäbe entspricht und sich über einen azimutalen Bereich von ca. 240° erstreckt.

Bei der in soweit erläuterten Konfiguration des Reibrades mit drei Reibrippen 46, 47 und 48, deren freie Längsbegrenzungsflächen schmale Ausschnitte einer als Kreiskegelfläche sind, bildet jede Reibrippe zwei Reibkanten 101 und 102, entlang derer die freien - im endgültig bearbeiteten Zustand flach gewölbten - freien Längsflächen 76 der Reibrippen rechtwinklig an die aus den Nuten aufragenden "breiten" Längsbegrenzungsflächen 103 bzw. 104 anschließen. Je nach der Drehrichtung des Reibrades 12 wirkt jeweils die eine oder andere Reibkante als Leitkante, entlang derer vom Reibholz 11 abgeriebenes Material radial nach außen gelenkt wird.

Die - geometrische - Dimenisionierung der Reibrippen 46, 47 und 48 und die Vorschubeinrichtung 18 sind dahingehend aufeinander abgestimmt, daß die Flächenpressung, die sich im Raucherzeugungsbetrieb beim Andrücken des Reibholzes 11 an die Rippen ergibt einen Wert von 20 bis 30 N/cm² hat.

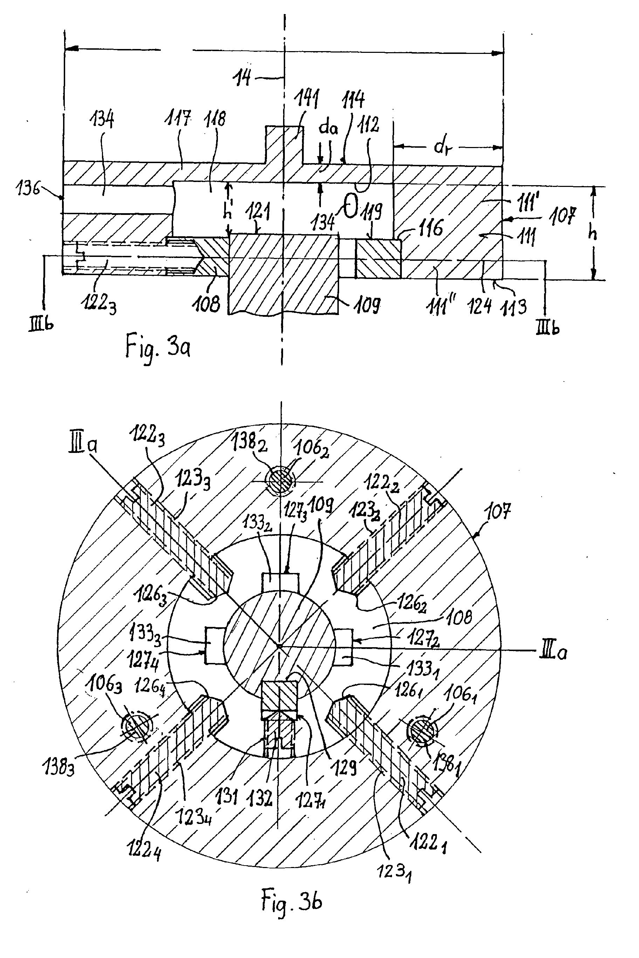

Der die Reibrippen 46, 47 und 48 tragende Basiskörper ist mittels dreier Ankerschrauben 106_{1, 2, 3} in der der aus den Figuren 2a und 2b sowie 3b ersichtlichen Anordnung mit einem insgesamt mit 107 bezeichneten, äußerlich kreiszylindrischen Nabenkörper lösbar fest verbunden, der seinerseits mit einem Koppelring 108 lösbar fest verbindbar ist, welcher drehfest mit der Abtriebswelle 109 des als Reibrad-Antrieb vorgesehenen Elektromotors 13 verbunden ist.

Der in den Fig. 3a und 3b mehr im Einzelnen dargestellte Nabenkörper 107 hat denselben Außendurchmesser D wie der Basiskörper 51 des Reibrades 12. Der Nabenkörper 107 hat die Grundform eines flachen, zur Motorwelle 109 hin offenen Topfes mit dickwandigem ringzylindrischen Mantel 111, dessen von der inneren, ebenen Topfbodenfläche 112 aus bis zur ebenen, freien Ringstirnfläche 113 aus gemessene Höhe h etwa der radialen Manteldicke dᵣ entspricht, die ihrerseits zwischen 1/5 und 1/4 des Durchmessers D beträgt. Die zwischen der inneren Bodenfläche 112 des Nabenkörpers 107 und seiner äußeren, dem Basiskörper 51 zugewandten Bodenfläche 114 gemessenen axiale Dicke dₐ hat bei dem zur Erläuterung dargestellten Ausführungsbeispiel einen Wert h/5.

Der Koppelring 108 ist im Inneren des Nabenkörpers 107 axial an einer schmalen Ringschulter 116 abgestützt, deren radiale Breite ca. 1/20 der radialen Dicke dᵣ des Topfmantels 111 entspricht.

Durch diese Ringschulter 116 ist ein "oberer" unmittelbar vom Boden 117 des Nabenkörpers 107 ausgehender Mantelbereich 111', der die radial äußere Begrenzung eines flachen zylindrischen Hohlraumes 118 bildet, gegen einen "unteren" anderer Mantel-Abschnitt 111" geringfügig größeren Innendurchmesser abgesetzt, in den der Koppelring 108 eingesetzt ist, dessen innere, ebene Ringfläche 119 zusammen mit der Endstirnfläche 121 der Motor-Antriebswelle 109 gleichsam die untere Begrenzung des zylindrischen Hohlraumes 118 bildet, dessen in axialer Richtung gemessene Höhe h' etwa 3/5 der Höhe h des Topfmantels 111 beträgt.

Zur axial verschiebefesten sowie drehfesten Verbindung des Nabenkörpers 107 am Koppelring 108 sind insgesamt vier bezüglich der Drehachse 14 des Reibrades 12 axial-symmetrisch angeordnete, radial angreifende, als Nabenschrauben dargestellte Befestigungsschrauben 122_{1, 2, 3, 4} vorgesehen, die in radialen Gewindebohrung 123₁ bis 121₄ des Nabenkörpers 107 schraubbar geführt sind, deren zentrale Achsen in der zwischen der Ebene der Ringschulter 116 und der freien Ringstirnfläche 113 des Nabenkörpers liegenden Mittelebene 124 des den Koppelring 108 aufnehmenden Abschnitts 111" des Mantels 111 des Nabenkörpers 107 verlaufen. Die paarweise diametral einander gegenüberliegend angeordneten Befestigungsschrauben 122_{1, 2, 3, 4} deren kegelförmige innere Enden in komplementär gestaltete, am Außenumfang des Koppelrings 108 angeordnete Verankerungsbohrungen 126₁ bis 126₄ desselben hineinragen, vermitteln im angezogenen Zustand eine sichere Kraft - formschlüssige Fixierung des Nabenkörpers 107 an dem drehfest mit der Motorwelle 109 verbundenen Koppelring 108.

Der Koppelring 108 ist an seiner den Endabschnitt der Motorwelle 109 mit Passsitz umschließenden Innenseite in der aus der Fig. 3b ersichtlichen axial-symmetrischen Anordnung mit insgesamt vier "axial" durchgehenden Innennuten 127_{1, 2, 3, 4} versehen, von denen eine zur drehfesten Verbindung des Koppelrings mit der Motorwelle 109 mittels einer üblichen Passfeder 128 ausgenutzt ist, die auch in eine entsprechende Außennut 129 der Motorwelle 109 eingreift und mittels einer in einer radialen Gewindebohrung 131, die in die "Gegennut" 127₁ des Koppelringes 108 mündet, schraubbar geführten Nabenschraube 132 gegen axiale Verrückungen gesichert ist.

Die weiteren Innennuten 127₂, 127₃, 127₄ des Koppelringes 108 beranden zusammen mit der Motorwelle 109 axial durchgehende Luft-Durchtrittskanäle 133_{1, 2, 3,} über die der achsnahe Teil des zylindrischen Innenraumes 118 des Nabenkörpers 107 mit dem Außenraum - radial außen - in kommunizierender Verbindung steht.

Der Mantel 111 des Nabenkörpers 107 ist innerhalb seines vom Boden 117 ausgehenden, sich bis zu der radialen Schulter 116 erstreckenden, dickerwandigen Abschnitts 111 mit diesen Abschnitt radial durchquerenden Querbohrungen 134 versehen, über die der Innenraum 118 des Nabenkörpers ebenfalls mit dem Außenraum in kommunizierender Verbindung steht.

Bei dem zur Erläuterung gewählten Ausführungsbeispiel sind vier solcher Querbohrungen 134 vorgesehen, die jeweils "oberhalb" der Gewindebohrungen 123_{1, 2, 3, 4} für die Befestigungsschrauben 122_{1, 2, 3, 4} angeordnet sind, die den dünnerwandigen Abschnitt 111" des Topfmantels 111 radial durchqueren.

Da die radial äußeren Mündungsöffnungen 136 der Querbohrungen 134 im Betrieb des Reibraucherzeugnisses 10 mit höherer Umfangsgeschwindigkeit rotieren als die radial weiter innen angeordneten Mündungsöffnungen der durch die Innennuten 127_{2, 3, 4} berandeten Luft-Durchtrittskanäle 133_{1, 2, 3,} ergibt sich zwischen diesen und den äußeren Mündungsöffnungen 136 der Querbohrungen 134 ein Druckgefälle, wobei der Druck im Bereich der äußeren Mündungsöffnungen 136 der Querbohrungen 134 signifikant niedriger ist als im Bereich der entlang der Motorwelle 109 parallel zur Drehachse 14 verlaufenden Luftdurchtrittskanäle 133_{1, 2, 3}, mit der Folge, daß über die zentralen Luftdurchtrittskanäle 133_{1, 2, 3} ein an Sektorbereichen der Motorwelle 109 vorbei in den Innenraum 118 des Nabenkörpers 107 hinein und über die Querbohrungen 134 radial nach außen gelenkter Luftstrom erzeugt wird, der eine wirksame Kühlung der Motorwelle 109 vermittelt und auch eine Wärmeabfuhr aus dem mit dem Basiskörper 51 in thermischem Kontakt stehenden Nabenkörper 107 bewirkt. Durch diese Kühllüfter-Wirkung des Nabenkörpers wird der Motor wirksam gegen eine Überhitzung geschützt, die ansonsten durch die im Raucherzeugnisbetrieb anfallende Reibungswärme auftreten könnte.

Die zur Fixierung des die Reibrippen tragenden Basiskörpers 51 am Nabenkörper 107 vorgesehenen Ankerschrauben 106_{1, 2, 3} stützen sich mit ihren Köpfen an am Basiskörper 51 gegenüber dessen Kegel-Basisebene 81 versenkt angeordneten, parallel zu dieser verlaufenden Stützflächen 137_{1, 2, 3} ab und stehen mit in entsprechender Symmetrie angeordneten Gewindebohrungen 138_{1,2, 3} des Topfmantels 111 des Nabenkörpers 107 in Eingriff. Die Ankerschrauben 106_{1,2, 3} durchqueren zwischen dem Basiskörper 51 und dem Nabenkörper 107 angeordnete Distanzringe 139_{1, 2, 3} gleicher Höhe, im fertig montierten Zustand des Reibrades 12 die zwischen der unteren Begrenzungsfläche 62 des Basiskörpers 51 und der äußeren Bodenfläche 114 des Nabenkörpers eingespannt sind.

Der Nabenkörper ist an seiner dem Basiskörper zugewandten Seite mit einem zentralen Zentrierzapfen 141 versehen, der mit einer Zentrierbohrung 142 komplementären lichten Querschnitts des Basiskörpers in formschlüssigem - zentrierendem - Eingriff steht. Die Distanzringe 139_{1, 2, 3} bestehen aus einem Stahl geringer Wärmeleitfähigkeit, um eine Wärmeübertragung vom Basiskörper 51 auf den Nabenkörper 107 möglichst gering zu halten.

Zur Erläuterung eines weiteren Ausführungsbeispiels eines erfindungsgemäßen Reibraucherzeugers sei nunmehr auf die Fig. 4a bis 4c bezug genommen.

Der in der Fig. 4a insgesamt mit 10' bezeichnete Reibraucherzeuger ist nach Aufbau und Funktion dem Reibraucherzeuger 10 gemäß den Fig. 1 bis 3 analog und unterscheidet sich von diesem lediglich durch die Gestaltung seines Reibrades 12' sowie dadurch, daß das Reibholz 11 von unten her an das Reibrad 12' angedrückt wird.

Auch bei dem Reibraucherzeuger 10' ist das Reibrad 12' zwei-teilig ausgebildet, mit einem drei Reibrippen 146, 147 und 148 tragenden Basiskörper 51', der eine zu dem Basiskörper 51 des Reibraucherzeugers 10 gleichsam komplementäre Form hat, sowie mit einem Nabenkörper 107, der nach Aufbau und Funktion mit dem in Fig. 1 bis 3 dargestellten Nabenkörper 107 des Reibraucherzeugers 10 identisch ist.

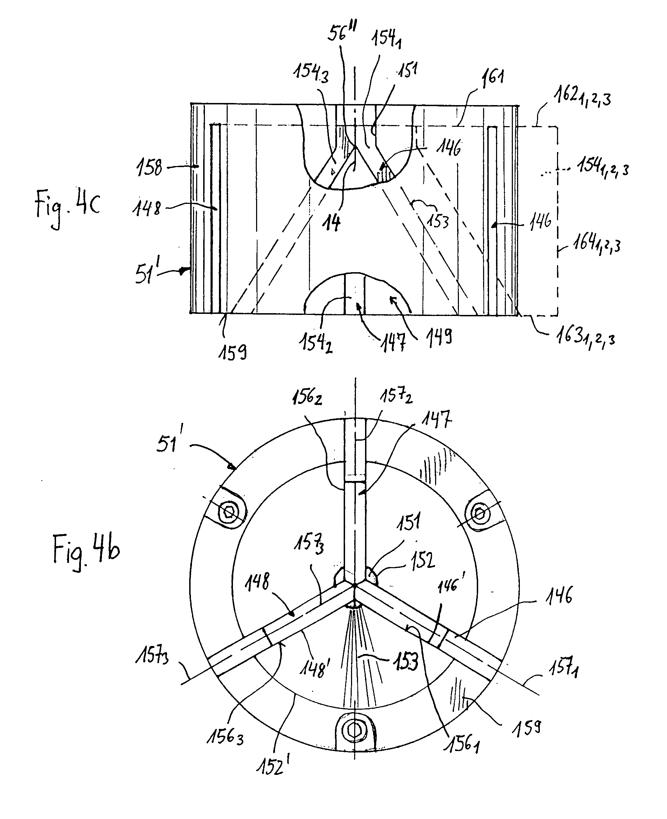

Der Basiskörper 51' hat einen sich nach unten erweiternden, konischen Einlaufraum 149, in den die Reibrippen 146, 147 und 148 radial hineinragen (Fig. 4b und 4c).

Der Basiskörper 51' hat äußerlich die Form eines kreiszylindrischen Blocks, der in seiner im montierten Zustand des Reibrades 12' dem Nabenkörper 107 zugewandten Seite mit einer in den Rippeinlaufraum 149 mündenden Durchgangsbohrung 151 versehen ist, die zur Aufnahme des Zentrierzapfens 141 des Nabenkörpers 107 bestimmt ist.

Die sich zwischen dem inneren Rand 152 dieser Durchgangsbohrung und dem äußeren Rand 152' des trichterförmigen Einflaufraumes 149 erstreckende, den Einlaufraum in radialer Richtung begrenzende Fläche 153 hat die Form der Mantelfläche eines Kreiskegel-Stumpfes, deren "fiktive" Kegelspitze auf der zentralen Achse 14 liegt. Die Einhüllende der Reibkanten der Reibrippen ist die Mantelfläche eines denselben Kegelwinkel aufweisenden Kreiskegels, dessen Spitze 56", wie der Darstellung der Fig. 4c entnahmbar, auf der zentralen Achse 14 des Basiskörpers liegt.

Abweichend von der Darstellung der Fig. 4b können je zwei Reibrippen, z. B. die Reibrippen 146 und 148 auch so angeordnet sein, daß ihre azimutal einander benachbarten freien Reibkanten 146' und 148', die parallel zur jeweiligen Schlitzmittelebene 157₁ bzw. 157₃ verlaufen, durch das durch die Drehachse 14 markierte Zentrum des Basiskörpers 51' verlaufen.

Die Reibrippen 146, 147 und 148 sind durch in den Einlaufraum 149 und die zentrale Durchgangsbohrung 151 hineinragende Randbereiche von Stahlplatten 154_{1, 2, 3} gebildet, die in radial verlaufende Schlitze 156_{1, 2,3} des Basiskörpers 51' eingesetzt sind, deren zwischen den Schlitzwangen verlaufende Mittelebenen 157_{1, 2, 3} sich in der zentralen Längsachse 14 des Basiskörpers 51' schneiden. In der Fig. 4c ist eine dieser Stahlplatten zur Darstellung ihrer Grundform gestrichelt in einer radial teilweise ausgerückten Position dargestellt.

Diese Schlitze 156_{1, 2, 3}, die sich zwischen der äußeren, zylindrischen Mantelfläche 158 und dem Einlaufraum 149 bzw. der zentralen Bohrung 151 erstrecken und auch zur freien Ringstirnfläche 159 des Basiskörpers 51' hin offen sind, enden an der dem Nabenkörper 107 zugewandten Seite des Basiskörpers 51' in einer innerhalb des Basiskörpers 51' liegenden Stützebene 161, an der die die Reibrippen bildenden Platten 154_{1, 2,3} mit ihren inneren Querkanten 162_{1, 2, 3} axial abgestützt sind.

In dem in die Schlitze 156_{1, 2, 3} in der aus den Fig. 4b und 4c ersichtlichen Anordnung eingesetzten Zustand der die Reibrippen bildenden Platten 154_{1,} _{2, 3} verlaufen deren äußere, radial schmälere Querkanten 163_{1, 2, 3} in der Ebene der freien Ringstirnfläche 159 des Basiskörpers 51' und deren äußere Längskanten 164_{1, 2, 3} bündig zur äußeren Mantelfläche 158 des Basiskörpers 51'. Innerhalb der zentralen Bohrung 151 schließen die dort prismatisch gestalteten inneren Abschnitte der Platten 154_{1, 2, 3} in der aus der Fig. 4b ersichtlichen Anordnung formschlüssig aneinander an.

Zur sicheren Fixierung der die Reibrippen bildenden Platten 154_{1, 2, 3} am Basiskörper 51' können diese im Bereich ihrer äußeren Querkanten 163_{1, 2, 3} sowie im Bereich ihrer äußeren Längskanten 164_{1, 2, 3} punktuell oder linienförmig mit den Basiskörper 51' verschweißt werden.

Die Fixierung des Basiskörpers 51' am Nabenkörper 107 erfolgt in derselben Art wie anhand des Reibraucherzeugers 10 erläutert.

Reibraucherzeuger 10 oder 10', wie anhand der Fig. 1 bis 4c erläutert, können auch mit beliebiger Orientierung der Führungs- und Drehachse, im Extremfall mit horizontaler Anordnung dieser Achsen, in einer Räucheranlage eingebaut sein.

## Patentansprüche

1. Reibraucherzeuger (10; 10') für die Rauchversorgung einer Räucherkammer mit
a) einem mittels eines Elektromotors (13) gesteuert antreibbaren Reibrad (12; 12'),
b) an das mittels einer Vorschubeinrichtung ein stabförmiges Reibholz (11) andrückbar ist,
c) das in einer Führungseinrichtung (16) verschiebbar geführt und dabei gegen Verdrehen gesichert ist, wobei
d) die Drehachse des Reibrades und die zentrale Achse der Führungseinrichtung miteinander fluchten und
e) die Führungseinrichtung mit einem kleinen Führungsspiel von z. B. 2 bis 4 % der Lateraldimensionen des Reibholzes behaftet ist,
f) und wobei das Reibrad mit Reibrippen (46, 47, 48; 146, 147, 148) versehen ist, die von einem Basiskörper (51; 51') aufragen und durch Reibkanten berandet sind, die in einer bezüglich der Drehachse des Reibrades rotationssymmetrischen Hüllfläche verlaufen, **dadurch gekennzeichnet, daß**
g) die erzeugende mit der Hüllfläche eine Linie ist, die die Drehachse (14) des Reibrades (12; 12')unter einem spitzen Winkel schneidet,
h) mindestens drei Reibrippen vorgesehen sind, der Anordnung bezüglich einer die Drehachse des Reibrades enthaltenden Radialebene desselben symmetrisch ist und
i) zwei Reibrippen mit je einer ihrer Reibkanten auf der Drehachse des Reibrades winklig aneinander anschließen.

2. Reibraucherzeuger nach Anspruch 1, **dadurch gekennzeichnet, daß** das Reibrad (12) die Grundform eines Kreiskegels hat, wobei die Reibkanten der Reibrippen parallel zu Mantellinien (79) des Basiskörpers (51) verlaufen.

3. Reibraucherzeuger nach Anspruch 2, **dadurch gekennzeichnet, daß** die Drehachse (14) des Reibrades (12) vertikal verläuft, und daß das Reibholz (11) von oben her an das Reibrad andrückbar ist.

4. Reibraucherzeuger nach Anspruch 1, **dadurch gekennzeichnet, daß** das Reibrad (12') die Grundform eines konischen Trichters hat, an dessen konischer Innenseite die Reibrippen (146, 147, 148) angeordnet sind.

5. Reibraucherzeuger nach Anspruch 2 oder Anspruch 4, **dadurch gekennzeichnet, daß** das Reibholz (11) bei im wesentlichen vertikalem Verlauf der Drehachse des Reibrades - von unten her - an das Reibrad andrückbar ist.

6. Reibraucherzeuger nach einem der Ansprüche 1 bis 5, **dadurch gekennzeichnet, daß** die Reibrippen (46, 47, 48) als stabförmige Teile ausgebildet sind, die in Nuten (53, 54, 55) des Basiskörpers (51) eingesetzt und mit diesem fest verbunden sind.

7. Reibraucherzeuger nach einem der Ansprüche 1 bis 6, **dadurch gekennzeichnet, daß** der die Reibrippen tragende Basiskörper (51; 51') mit einem Nabenkörper (107) lösbar fest verbunden ist, der seinerseits lösbar fest mit der Abtriebswelle des Antriebsmotors (13) verbindbar ist.

8. Reibraucherzeuger nach Anspruch 7, **dadurch gekennzeichnet, daß** der Nabenkörper (107) als Kühllüfter ausgebildet ist, der eine Kühlung der Abtriebswelle des Elektromotors vermittelt.

9. Reibraucherzeuger nach Anspruch 8, **dadurch gekennzeichnet, daß** der Nabenkörper (107) die Grundform eines zylindrischen Topfes mit dickwandigem Mantel (111) hat, der im Innenbereich seines freien Mantelrandabschnittes drehfest mit einem mit der Motorwelle seinerseits drehfest verbundenen Koppelring (108), dessen Außendurchmesser dem Innendurchmesser des Nabenkörpers entspricht, verbindbar ist, wobei der Koppelring mit mindestens einer radial innen angeordneten axial durchgehenden Ausnehmung (127_{1, 2, 3, 4}) versehen ist und der Mantel des Nabenkörpers mit mindestens einer, vorzugsweise mehreren durchgehenden Querbohrungen (134) versehen ist.

10. Reibraucherzeuger nach Anspruch 9, **dadurch gekennzeichnet, daß** der Koppelring (108) mit seiner zylindrischen Innenfläche unmittelbar an der Abtriebswelle des Elektromotors anliegt und an seiner Innenseite mindestens eine, vorzugsweise mehrere in azimutal äquidistanter Anordnung vorgesehene Innennut(en) (127₂, 127₃, 127₄ hat, die zusammen mit der Motorwelle je einen axialen Luftdurchtrittskanal bildet/bilden.

11. Reibraucherzeuger nach einem der Ansprüche 1 bis 10, **dadurch gekennzeichnet, daß** der Basiskörper (107) über Stützelemente (139_{1, 2, 3}) aus Material geringer Wärmeleitfähigkeit, vorzugsweise Stützringen, die von Verankerungsschrauben durchquert sind, an dem Nabenkörper abgestützt ist.

12. Reibraucherzeuger nach Anspruch 11, **dadurch gekennzeichnet, daß** der Basiskörper und der Nabenkörper über Zentrierelemente (141, 142) komplementärer Querschnittsform miteinander in Eingriff stehen.

13. Reibraucherzeuger nach Anspruch 12, **dadurch gekennzeichnet, daß** der Nabenkörper (107) einen zentralen, von der Bodenaußenseite abstehenden Zentrierzapfen (141) hat, der in eine zentrale Zentrierbohrung (142) des Basiskörpers hineinragt.

14. Reibraucherzeuger nach einem der Ansprüche 1 bis 13, **dadurch gekennzeichnet, daß** der Querschnitt der Reibrippen symmetrisch bezüglich ihrer jeweils zwischen den Reibkanten verlaufenden Mittelflächen ist.

15. Reibraucherzeuger nach einem der Ansprüche 1 bis 14, **dadurch gekennzeichnet, daß** der Antriebsmotor (13) des Reibrades zwischen alternativen Drehrichtungen umschaltbar ist.

16. Reibraucherzeuger nach Anspruch 15, **dadurch gekennzeichnet, daß** eine Steuerungseinrichtung vorgesehen ist, die von Räucherzyklus zu Räucherzyklus den Motor in die zum vorherigen Zyklus alternative Drehrichtung steuert.

17. Reibraucherzeuger nach einem der Ansprüche 1 bis 16, **dadurch gekennzeichnet, daß** die zum Andrücken des Reibholzes an das Reibrad vorgesehene Vorschubeinrichtung (18) mindestens ein Transportrad (19) umfaßt, das an einem quer zur Stablängsachse verschiebbaren Lagerblock (22) um eine rechtwinklig zu der Stabachse verlaufende Achse (21) drehbar gelagert, rotatorisch antreibbar und durch Verschiebung des Lagerblocks in kraft-formschlüssigen Eingriff mit dem Reibholz bringbar ist.

18. Reibraucherzeuger nach Anspruch 17, **dadurch gekennzeichnet, daß** der Lagerblock mittels eines pneumatisch oder hydraulisch betätigbaren, vorzugsweise doppelt wirkenden Zylinder (26) druckgesteuert in alternativen Richtungen verschiebbar ist.

19. Reibraucherzeuger nach Anspruch 17 oder Anspruch 18, **dadurch gekennzeichnet, daß** das Transportrad mittels eines Schwenkantriebes (31, 34) innerhalb eines definierten Winkelbereiches drehbar ist.

20. Reibraucherzeuger nach Anspruch 19, **dadurch gekennzeichnet, daß** der Schwenkantrieb einen doppelt wirkenden pneumatischen oder hydraulischen Zylinder (31) mit einseitig aus dem Gehäuse (32) austretender Kolbenstange (25) umfaßt, die an einem mit der Lagerwelle des Transportrades drehfest verbundenen Schwenkhebel (34) angreift.

21. Reibraucherzeuger nach einem der Ansprüche 17 bis 20, **dadurch gekennzeichnet, daß** die Führungseinrichtung eine Gleitrolle (37) umfaßt, deren Drehachse (39) parallel zur Drehachse des Transportrades (19) verläuft und zusammen mit der Drehachse des Transportrades eine rechtwinklig zur zentralen Achse (17) der Führungseinrichtung verlaufende Ebene aufspannt, wobei das Reibholz innerhalb des Führungsspiels an die Gleitrolle andrückbar ist.

22. Reibraucherzeuger nach Anspruch 21, **dadurch gekennzeichnet, daß** der Abstand der Drehachse (39) der Gleitrolle (37) von der zentralen Achse (17) der Führungseinrichtung (16) einstellbar ist.

23. Reibraucherzeuger nach Anspruch 22, **dadurch gekennzeichnet, daß** das Transportrad und die Gleitrolle zwischen dem reibradseitigen Ende der Führungseinrichtung und dem Reibrad angeordnet sind.
